# EUROPEAN PATENT APPLICATION

(11) **EP 4 693 610 A1**
(43) Date of publication of application: **11.02.2026**
(21) Application number: 24882914.5
(22) Date of filing: 25.10.2024
(51) Int. Cl.: H01M 10/613, H01M 10/6557, H01M 50/502, H01M 10/6568, H01M 50/367

(54) **BATTERY PACK**

(30) Priority: 27.10.2023 KR 20230145949; 22.02.2024 KR 20240026004; 24.10.2024 KR 20240146627
(71) Applicant: LG Energy Solution, Ltd., Seoul 07335 (KR)
(72) Inventor: KIM, Yoonkyung, Daejeon 34122 (KR); WOO, Sun Hwak, Daejeon 34122 (KR); LEE, Hyunji, Daejeon 34122 (KR); CHO, Hunhyeon, Daejeon 34122 (KR)
(74) Representative: Plasseraud IP
(86) International application number: PCT/KR2024/016463
(87) International publication number: WO 2025/089888

(57) **Abstract**

Provided is a battery pack comprising: a plurality of cell units, each comprising one or more battery cells: one or more spacers disposed between the plurality of cell units and each provided with one or more venting channels through which gas discharged from one or more of the battery cells can flow; and one or more cooling members arranged to face at least one cell unit from among the plurality of cell units, wherein the plurality of cell units and one or more cooling members are arranged along a first direction, and the plurality of cell units and one or more of the spacers are arranged along a second direction intersecting the first direction.

## Description

### Technical Field

The present disclosure relates to a battery pack.

### Background Art

Secondary batteries may be charged and discharged, and thus, are widely utilized in mobile devices such as a digital camera, a mobile phone, and a laptop, and in particular, have recently gained attention as an energy source of an electric vehicle, an energy storage system (ESS), or the like.

As the electric vehicle or the ESS demands large-capacity and high-output power, large-capacity battery devices are widely used, such as a battery module or a battery pack with multiple secondary batteries (battery cells) accommodated within a housing.

In an existing battery pack (or a battery module), an edge cooling manner is applied, in which a heat sink for cooling a battery cell is positioned adjacent to an edge portion of the battery cell to cool the battery cell. This edge cooling manner has a problem in that a contact area between the heat sink and the battery cell is relatively narrow, making it difficult to effectively carry out heat transfer.

In addition, when a battery cell applied to the battery pack (or the battery module) has a pouch-type secondary battery structure, there is a problem in that it is difficult to discharge gases from the battery cell in a predetermined direction in the event of thermal propagation (TP).

As improving rapid charging performance and TP performance of battery cells has recently continued to be required, a change to a surface cooling manner from the existing edge cooling manner is required, and in addition thereto, a structure for discharging gases in a predetermined direction is also required.

### Detailed Description of the Invention

### Technical Goals

The present disclosure is conceived to solve at least some of the above-described problems in the related art and is intended to provide a battery pack having high energy density and excellent cooling efficiency.

Further, the present disclosure is intended to provide a battery pack in which a flow of a gas released from a battery cell may be guided in a preset direction.

### Technical solutions

To achieve the above goals, according to example embodiments of the present disclosure, provided is a battery pack including a plurality of cell units, each including one or more battery cells, one or more spacers disposed between the plurality of cell units and provided with one or more venting flow path parts through which a gas released from the one or more battery cells flows, and one or more cooling members disposed to face at least one of the plurality of cell units, and the plurality of cell units and the one or more cooling members are disposed along a first direction, and the plurality of cell units and the one or more spacers are disposed along a second direction intersecting with the first direction.

According to an example embodiment, in at least one of the plurality of cell units, the one or more battery cells may be provided in plurality and disposed to be stacked along the first direction.

According to an example embodiment, the plurality of cell units and the one or more cooling members may be disposed alternately along the first direction.

According to an example embodiment, the one or more battery cells may include a cell case configured to surround an electrode assembly and a sealing part formed as the cell case is sealed on at least one side surface of the cell case, and the spacer may be disposed to face the sealing part.

According to an example embodiment, the battery pack may further include a pack housing including a lower frame in which the plurality of cell units are accommodated and an upper frame configured to cover an upper portion of the lower frame.

According to an example embodiment, the battery pack may further include a busbar assembly configured to electrically connect the plurality of cell units, and the busbar assembly may be disposed between the plurality of cell units and the upper frame.

According to an example embodiment, the one or more battery cells may include one or more lead tabs protruding in a direction toward the upper frame and electrically connected to the busbar assembly.

According to an example embodiment, the busbar assembly may include a busbar electrically connected to at least one of the plurality of cell units and a busbar frame configured to support the busbar and provided with a first venting hole through which a gas released from the plurality of cell units is discharged.

According to an example embodiment, the one or more spacers may be coupled to the busbar frame.

According to an example embodiment, the spacer may include one or more inlet holes opened in a direction toward the one or more battery cells and one or more discharge holes provided for a gas entering through the inlet hole to be discharged.

According to an example embodiment, in the spacer, the discharge hole may be opened in a direction toward a cell seating surface of the lower frame.

According to an example embodiment, the plurality of cell units may include a first cell unit and a second cell unit contacting opposite surfaces of the one or more spacers, respectively, and the one or more spacers may include a first venting flow path part through which a gas released from the first cell unit flows, a second venting flow path part through which a gas released from the second cell unit flows, and a partition wall configured to partition the first venting flow path part from the second venting flow path part.

According to an example embodiment, the cooling member may include a cooling body part disposed to face the one or more battery cells and a cooling flow path disposed inside the cooling body part and configured for a coolant to flow through.

According to an example embodiment, the cooling flow path may have a path with at least one turn inside the cooling body part.

According to an example embodiment, the battery pack may further include a pack housing configured to accommodate the plurality of cell units and including a coolant pipe configured for a coolant to flow through, and the cooling flow path of the cooling member may be in communication with the coolant pipe.

According to an example embodiment, the cooling member may further include a plurality of coolant ports disposed at each of one side of the second direction and the other side of the second direction of the cooling member and in communication with the cooling flow path.

According to an example embodiment, the plurality of coolant ports may include a plurality of coolant inlet ports disposed at one side of the second direction of the cooling member and a plurality of coolant outlet ports disposed at the other side of the second direction of the cooling member, and the cooling flow path may extend from the plurality of coolant inlet ports to the plurality of coolant outlet ports along the second direction.

According to an example embodiment, the battery pack may further include a cell tray on which the plurality of cell units are seated, and the cell tray may include a second venting hole configured for a gas generated in the one or more battery cells to pass through.

According to an example embodiment, the spacer may include one or more inlet holes opened in a direction toward the one or more battery cells and one or more discharge holes configured for a gas entering through the inlet hole to be discharged and disposed to face the second venting hole of the cell tray.

According to an example embodiment, the battery pack may further include a pack housing configured to accommodate the plurality of cell units, and a venting space may be formed between a lower surface of the cell tray and the pack housing.

### Effects of the Invention

According to the example embodiments, since a contact area between an assembly composed of a plurality of battery cells and a cooling member may be maximally secured, it is possible to implement a battery pack having high energy density and excellent cooling performance.

In addition, through a spacer disposed between battery cells, it is possible to guide a flow of a gas released from a battery cell in a preset direction.

### Brief Description of Drawings

FIG. 1 is an exploded perspective view of a battery pack.
FIG. 2 is a reference diagram for illustrating configurations of a cell assembly and a cooling member included in a battery pack.
FIG. 3 is a perspective view of a battery cell included in a cell assembly.
FIG. 4 is an example perspective view of a cooling member according to various example embodiments.
FIG. 5 is an example perspective view of a cooling member according to various example embodiments.
FIG. 6 is a reference diagram showing a cell assembly and a cooling member disposed within a pack housing.
FIG. 7 is a bottom perspective view of a spacer.
FIG. 8 is a reference diagram for illustrating a flow path of a gas released from a battery cell.
FIG. 9 is a reference diagram for illustrating a coupling of a cell assembly and a busbar assembly.
FIG. 10 shows an assembly sequence of a battery pack.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described in the specification and the configurations illustrated in the drawings are no more than the most preferred example embodiments of the present disclosure and do not fully cover the technical idea of the present disclosure. Accordingly, it should be understood that there may be various alternatives, equivalents, and modification examples when this application is filed.

Identical reference numerals or signs in each drawing attached to the specification may refer to components or elements performing substantially identical functions. For convenience of description and understanding, the same reference numeral or sign may be used for description in different example embodiments. In other words, even though elements with the same reference numeral are illustrated in a plurality of drawings, not all of the plurality of drawings may represent a single example embodiment.

In the following description, a singular expression includes a plural expression unless apparently otherwise defined by context. It should be understood that terms such as "comprise or include" and "composed of" are intended to indicate the presence of a feature, a number, a step, an operation, an element, a component, or a combination thereof which are described in the specification and not intended to previously exclude the possibility of the presence or addition of one or more other features, numbers, steps, operations, elements, components, or combinations thereof.

In addition, expressions such as upper side, upper portion, above, lower side, lower portion, below, side surface, front surface, and rear surface hereinafter are represented with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, a using order, an arrangement sequence, or the like of an element combined with an ordinal number is not to be construed as limited by the ordinal number. In some cases, each ordinal number may also be used by replacing each other.

Hereinafter, example embodiments of the present disclosure are described with reference to the accompanying drawings. However, the present disclosure is not limited to the example embodiments described. For example, a person of ordinary skill in the art who understands the idea of the present disclosure may suggest other example embodiments included within the scope of the idea of the present disclosure through the addition, change, or deletion of an element, which, however, are also included within the scope of the present disclosure. The shapes, sizes, and the like of elements in the drawings may be exaggerated for clearer description.

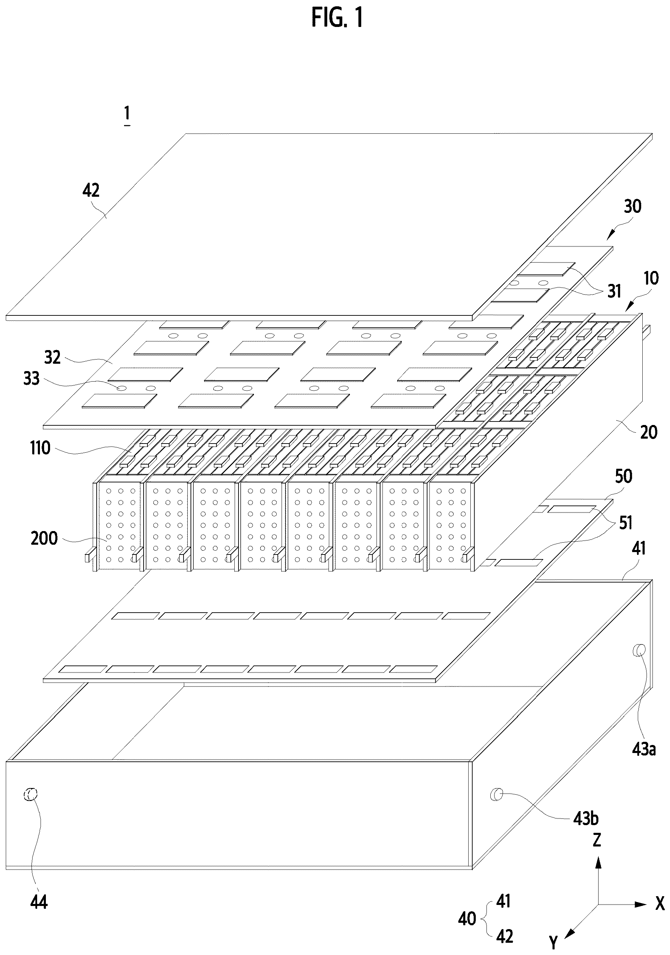

FIG. 1 is an exploded perspective view of a battery pack 1.

In example embodiments described below, the "battery pack 1" generally refers to an energy storage system composed of a plurality of battery cells electrically connected and may also be understood as a battery module or an energy storage system (ESS).

The battery pack 1 according to example embodiments may include a cell assembly including a plurality of battery cells 110, a cooling member 20 disposed at one side of the cell assembly 10, a busbar assembly 30 electrically connecting the plurality of battery cells 110, and a pack housing 40 in which these are accommodated.

The cell assembly 10 may include the plurality of battery cells 110 and one or more spacers 200 that fix locations of the battery cells 110 and guide a flow direction of gas generated in the battery cells 110.

The battery cell 110 included in the cell assembly 10 may be composed of a secondary battery that may be charged and discharged. For example, the battery cell 110 may be a pouch-type secondary battery in which an electrode assembly is accommodated within a sealed pouch.

The battery cell 110 included in the battery pack 1 according to example embodiments is not limited to the pouch-type secondary battery. For example, the battery cell 110 may also be composed of a prismatic secondary battery in which an electrode assembly is accommodated within a metal case having predetermined stiffness or a cylindrical secondary battery in which an electrode assembly is accommodated within a cylindrical case.

In the battery pack 1 according to example embodiments, the cell assembly 10 may be assembled directly onto the pack housing 40 with a separate case member surrounding an exterior thereof omitted. In other words, the battery pack 1 according to example embodiments may have a structure known as a cell-to-pack (CTP) type, other than a structure in which the cell assembly 10 with the battery cells 110 stacked is accommodated in a separate module case and the module case is accommodated in the pack housing 40. In the battery pack 1 of the CTP type, the separate module case surrounding each cell assembly 10 may be omitted, and thus, more battery cells 110 may be disposed intensively within the pack housing 40, greatly increasing the energy density of the battery pack 1.

In example embodiments, the battery pack 1 may include the cooling member 20 for cooling heat generated in charging and discharging processes of the battery cell 110. The cooling member 20 may be disposed at one side of the cell assembly 10 and cool the battery cell 110 by absorbing thermal energy thereof.

The cooling member 20 may be composed of a material with easy heat transfer. For example, the cooling member 20 may be composed of aluminum, of which thermal conductivity is excellent, to effectively perform the role of a heat sink absorbing thermal energy generated in the battery cell 110.

The cooling member 20 may be provided in plurality within the battery pack 1 and disposed between the cell assemblies 10. For example, referring to FIG. 1, the cooling members 20 and a plurality of cell assemblies 10 may be disposed alternately along a first direction. According to such arrangement structure, since both surfaces of the cell assembly 10 may be all in contact with the cooling member 20, the cell assembly 10 may be cooled more effectively.

The busbar assembly 30 may be disposed above the cell assembly 10 and the cooling member 20. For example, referring to FIG. 1, the busbar assembly 30 may be disposed between the cell assembly 10 and an upper frame 42 and electrically connected to the plurality of battery cells 110 of the cell assembly 10.

The busbar assembly 30 may include a conductive busbar 31 electrically connecting the plurality of battery cells 110 included in the cell assembly 10 to each other and a busbar frame 32 supporting the busbar 31.

The busbar assembly 30 may be disposed to cover upper portions of the cell assembly 10 and the cooling member 20 disposed along one direction. For example, when assembling the battery pack 1, as the cell assembly 10 and the cooling member 20 are disposed to be stacked along one direction (for example, an X-axis direction of FIG. 1) and then the busbar assembly 30 is seated on the upper portions thereof, the cell assembly 10 and the busbar assembly 30 may be connected to each other.

In example embodiments, so that a gas discharged from the cell unit 100 in an upward direction may smoothly exit, one or more venting holes 33 may be provided in the busbar frame 32.

The cell assembly 10, the cooling member 20, and the busbar assembly 30 may be accommodated within the pack housing 40.

The pack housing 40 may include a lower frame 41 in which the cell assembly 10 and the cooling member 20 are seated and the upper frame 42 coupled to an upper portion of the lower frame 41 and covering an internal space of the pack housing 40.

The pack housing 40 may further include a cross frame (not shown) that partitions the internal space into a plurality of spaces. The cross frame (not shown) may be configured to be coupled to the lower frame 41 and may be configured to provide additional stiffness to the pack housing 40 as well as partition the internal space of the pack housing 40 into a plurality of accommodation spaces and apply surface pressure to the battery cell 110 accommodated in the pack housing 40.

To protect the components within the pack housing 40 from an external impact, at least a portion of the pack housing 40 may be formed of a metal material or a resin material having predetermined stiffness.

In example embodiments, the battery pack 1 may further include a cell tray 50 on which the plurality of cell assemblies 10 are seated. For example, referring to FIG. 1, the plurality of cell assemblies 10 and a plurality of cooling members 20 may be accommodated within the pack housing 40 in a state seated on the cell tray 50.

The cell tray 50 may be formed of a material having enough stiffness to stably support the plurality of cell assemblies 10 and the cooling members 20, for example, a metal or resin material.

In example embodiments, the cell tray 50 may include a plurality of venting holes 51 through which a gas or a flame released from the battery cell 110 may pass. For example, the plurality of venting holes 51 may be disposed to face the spacer 200 of a cell unit 100 in the cell tray 50, and the gas or the flame generated in the battery cell 110 may flow out through the spacer 200 and through the venting holes 51 of the cell tray 50. In the following description, to be distinguished from the venting hole 33 formed in the busbar assembly 30, the venting hole 33 of the busbar assembly 30 is defined as a first venting hole 33, and the venting hole 51 of the cell tray 50 is defined as a second venting hole 51.

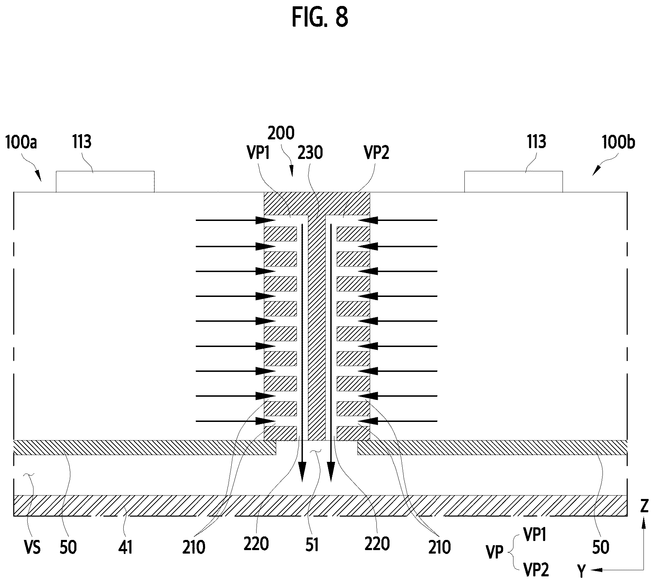

In example embodiments, a venting space (for example, VS of FIG. 8) in which a gas or a flame may flow may be formed between the cell tray 50 and the lower frame 41 of the pack housing 40. Alternatively, the venting space may also be formed within the cell tray 50.

In example embodiments, one or more venting members 44 configured to discharge a gas or a flame to the outside of the battery pack 1 may be disposed on at least one side of the pack housing 40. The gas or the flame flowing out through the second venting hole 51 of the cell tray 50 may flow within the venting space and be safely discharged through the venting member 44 to the outside of the pack housing 40.

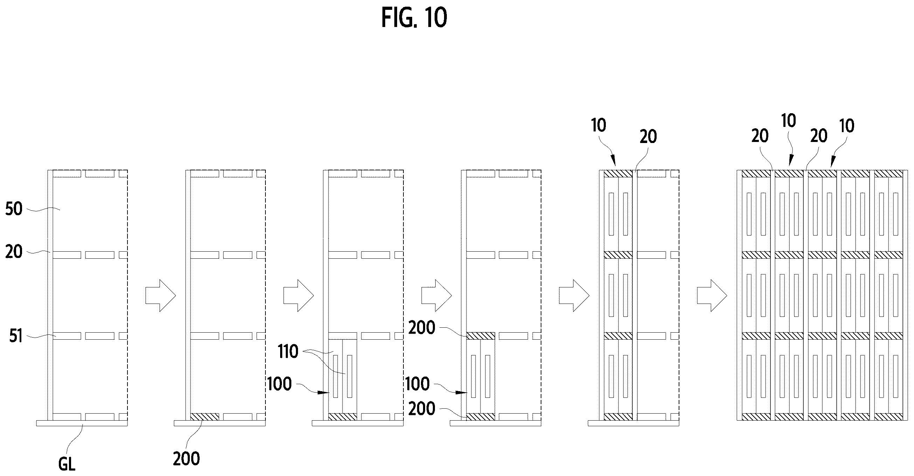

However, in example embodiments, the plurality of cell assemblies 10 may be accommodated as seated directly in the pack housing 40 without the separate cell tray 50. For example, the plurality of cell assemblies 10 may be seated and fixed on an upper surface of the lower frame 41 along a guideline (for example, GL of FIG. 10) set on the lower frame 41 of the pack housing 40.

In this case, a thermally conductive adhesive (not shown) may be applied between the lower frame 41 of the pack housing 40 and a lower surface of the cell assembly 10 and may fix a location of the cell assembly 10.

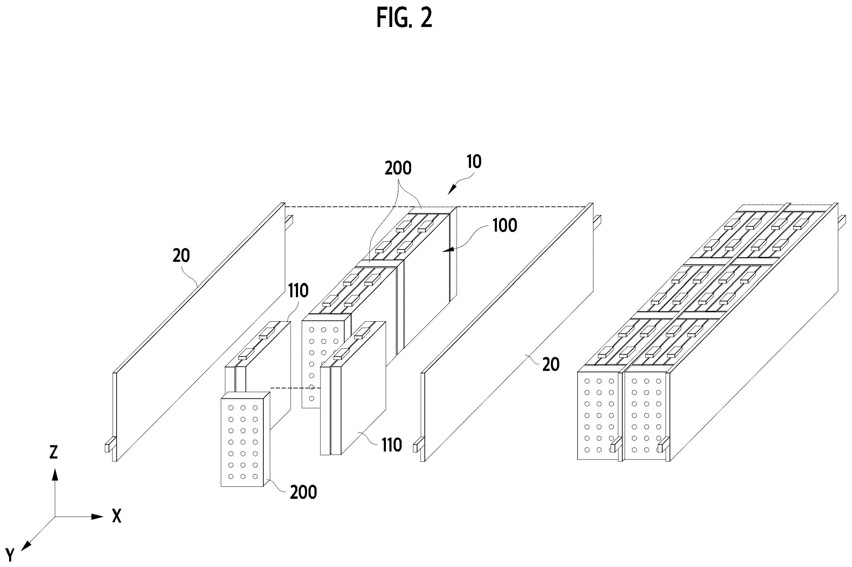

Hereinafter with reference to FIGS. 2 to 8, the cell assembly 10 and the cooling member 20 included in the battery pack 1 according to example embodiments are described in more detail.

FIG. 2 is a reference diagram for illustrating configurations of the cell assembly 10 and the cooling member 20 included in the battery pack 1.

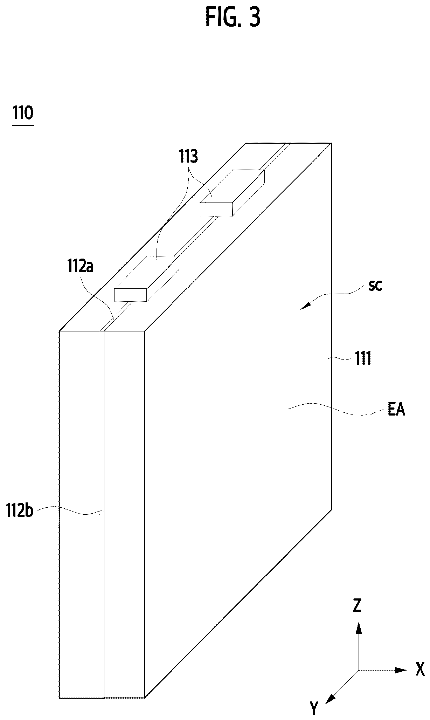

FIG. 3 is a perspective view of the battery cell 110 included in the cell assembly 10.

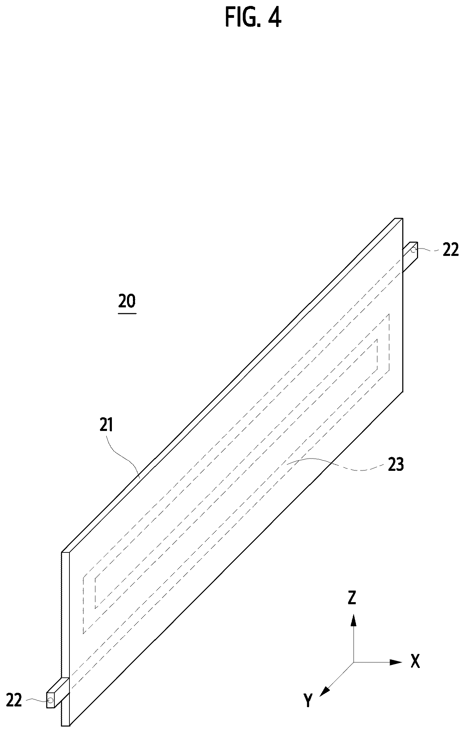

FIG. 4 is an example perspective view of the cooling member 20 according to various example embodiments.

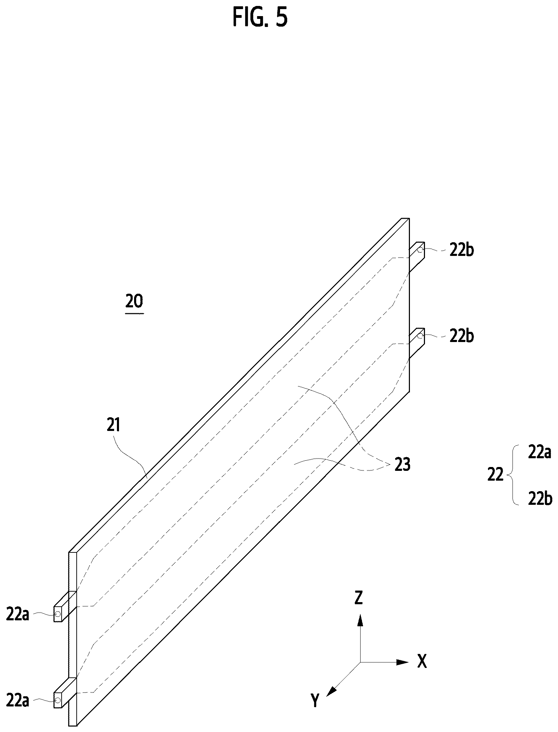

FIG. 5 is an example perspective view of the cooling member 20 according to various example embodiments.

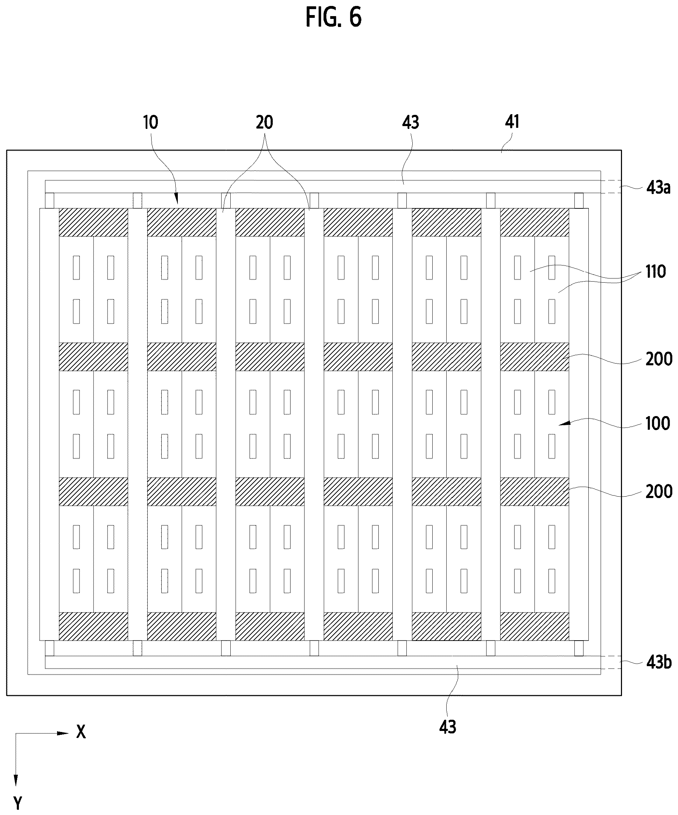

FIG. 6 is a reference diagram showing the cell assembly 10 and the cooling member 20 disposed within the pack housing 40.

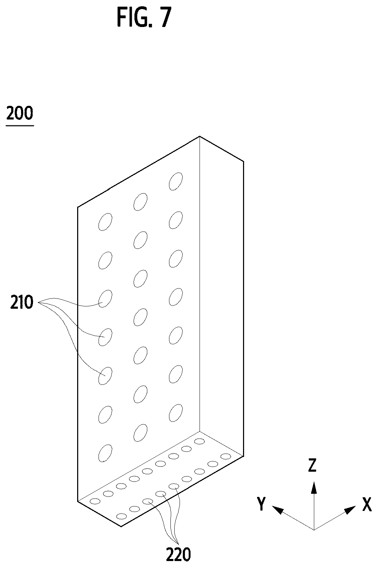

FIG. 7 is a bottom perspective view of the spacer 200.

FIG. 8 is a reference diagram for illustrating a flow path of a gas released from the battery cell 110.

The cell assembly 10 and the cooling member 20 described in FIGS. 2 to 8 correspond to the cell assembly 10 and the cooling member 20 described above in FIG. 1, and thus, an overlapping description may be omitted.

In the cell assembly 10, at least two battery cells 110 may be stacked in one direction (for example, the X-axis direction of FIG. 2) to form one cell unit 100. For example, referring to FIG. 2, two battery cells 110 may be stacked to form the cell unit 100, and a plurality of these cell units 100 may be disposed along a direction intersecting, preferably, a direction (for example, a Y-axis direction of FIG. 2) intersecting perpendicularly, with a stacking direction (for example, the X-axis direction of FIG. 2) of the battery cells 110 to constitute a portion of the cell assembly 10.

The battery cell 110 constituting the cell unit 100 may have a pouch-type secondary battery structure in which an electrode assembly ET is accommodated within a pouch-type cell case.

In the pouch-type secondary battery, the electrode assembly ET and an electrolyte may be accommodated within a pouch-type cell case SC formed by processing one or a plurality of exterior materials. The cell case SC may be composed of an aluminum laminated film having flexibility, but a specific form or material thereof is not limited thereto.

The electrode assembly ET included in the battery cell 110 may have a structure in which one or more positive electrode plates and one or more negative electrode plates are disposed to be stacked with a separator in between.

The cell case SC of the battery cell 110 may include an electrode accommodation part 111 having an internal space in which the electrode assembly ET is accommodated and sealing parts 112a, 112b formed as the cell case SC is sealed at an edge of the electrode accommodation part 111.

The sealing parts 112a, 112b may include a first sealing part 112a formed at a portion where a metallic lead tab 113 electrically connected to the electrode assembly ET protrudes of the edge of the electrode accommodation part 111 and a second sealing part 112b formed at a portion where the lead tab 113 does not protrude. For example, referring to FIG. 3, the battery cell 110 may have a unidirectional tab structure in which one pair of lead tabs 113 protrudes to one side of the electrode accommodation part 111, and in the electrode accommodation part 111, the first sealing part 112a may be formed as an edge where the lead tabs 113 are exposed is sealed and the second sealing part 112b may be formed as an edge where the lead tabs 113 are not exposed is sealed. In this case, to enhance sealing reliability and minimize space occupied by the sealing parts 112a, 112b, a portion of the second sealing part 112b may be formed as folded at least once.

In the cell unit 100, the battery cells 110 may be arranged for the lead tabs 113 to be in a direction (for example, a positive Z-axis direction of FIG. 2) toward an upper portion of the battery pack 1. Referring to FIGS. 2 and 3, the cell unit 100 may be composed of the battery cells 110 having the unidirectional tab structure in which the lead tabs 113 are disposed at one side, and in this case, the battery cells 110 may be disposed to be stacked for all of the lead tabs 113 to face an upper direction (the positive Z-axis direction) of the battery pack 1.

The spacer 200 is disposed between two neighboring cell units 100 to allow the two neighboring cell units 100 to maintain an appropriate gap between each other. In addition, the spacer 200 may be disposed at each of both end portions of a length direction (for example, the Y-axis direction of FIG. 2) of the cell assembly 10 as well as between the cell units 100.

Referring to FIG. 2, the cell unit 100 and the spacer 200 may be disposed alternately along a direction perpendicular to the stacking direction of the battery cells 110 in the cell assembly 10. In this case, in a state where the cell assembly 10 is seated in the pack housing 40, one cell unit 100 may be fixed in a state fitted between two spacers 200.

The spacer 200 may have a thickness (a length of the Y-axis direction in the spacer 200 of FIG. 2) of about 10 millimeters (mm) but may also be fabricated with other thicknesses as needed.

The battery cell 110 of the cell assembly 10 may be cooled by the cooling member 20 adjacent to the cell assembly 10.

The cooling member 20 may be disposed to face the electrode accommodation part 111 of the battery cell 110. For example, referring to FIG. 2, when two or more battery cells 110 are disposed to be stacked in the first direction (the X-axis direction) in one cell unit 100, the cooling member 20 may be disposed to face the electrode accommodation part 111 of the battery cell 110 in the first direction (the X-axis direction). In this case, a plurality of cell units 100 may be disposed along a length direction (for example, the Y-axis direction) of the cooling member 20 with the electrode accommodation part 111 of the battery cell 110 facing the cooling member 20.

In addition, the plurality of cell units 100 may be disposed alternately with the plurality of cooling members 20 along a direction parallel to the stacking direction (in other words, the first direction) of the battery cells 110 constituting the cell units 100 in the battery pack 1, and in this case, the battery pack 1 may have a structure in which one or more cell units 100 are disposed between two cooling members 20 as illustrated in FIG. 2.

According to this arrangement structure, compared to a case where the cooling member 20 (or another component that may serve as a heat sink other than the cooling member 20) is in contact with a side portion of the battery cell 110, in other words, a sealing part or a folding part (which may represent an edge where the sealing part is not formed in the cell case SC), a contact area between the cooling member 20 and the battery cell 110 may be larger, and thus, cooling efficiency may further increase.

In particular, cooling the battery cell 110 effectively is significant for large-capacity energy storage and rapid charging required recently in the battery pack 1, and according to the arrangement structure of the cooling member 20 according to example embodiments, since the contact area between the battery cell 110 and the cooling member 20 may be maximized, the battery pack 1 with excellent cooling performance may be implemented.

For more rapid and effective cooling, a cooling flow path 23 through which a coolant may flow may be formed within the cooling member 20. For example, referring to FIG. 4, the cooling member 20 may include a cooling body part 21 of a flat plate type structure within which the cooling flow path 23 is formed and a coolant port 22 disposed at one side and another side of the cooling body part 21 and in communication with the cooling flow path 23 so that the coolant may enter and be discharged. For example, the coolant may enter from the outside of the cooling member 20 to the cooling flow path 23 through the coolant port 22 disposed at one side of the cooling member 20. The coolant after circulating inside the cooling flow path 23 may be discharged to the outside of the cooling member 20 through the coolant port 22 disposed at another side of the cooling flow path 23.

As in FIG. 4, the cooling flow path 23 may be provided as a path with at least one turn within the cooling member 20. Accordingly, a contact area between the coolant and the cooling member 20 may increase, and thus, the coolant may effectively cool the cooling member 20 and the battery cell 110. However, a specific shape of the cooling flow path 23 is not limited to what is illustrated in the drawings and may be formed as various paths as needed.

The cooling flow path 23 of the cooling member 20 may be in communication with one or more coolant pipes 43 provided in the pack housing 40. The coolant entering to the cooling member 20 through the coolant pipe 43 may flow along the cooling flow path 23 and cool the cooling member 20 and the battery cell 110, and then, may be discharged to the coolant pipe 43. For example, referring to FIG. 6, a coolant inlet 43a through which the coolant is injected from the outside of the battery pack 1 and a coolant outlet 43b through which the coolant after circulating inside the battery pack 1 is discharged may be provided in the pack housing 40, and each cooling member 20 may be connected to the coolant pipe 43 provided within the pack housing 40 and in communication with the coolant inlet 43a and the coolant outlet 43b. However, specific shapes or locations of the coolant pipe 43, the coolant inlet 43a, and the coolant outlet 43b in the pack housing 40 are not limited to what is illustrated the drawings and may be appropriately changed as needed.

In various example embodiments, the cooling flow path 23 of the cooling member 20 may be implemented in various forms.

For example, referring to FIG. 5, in example embodiments, a plurality of coolant ports 22 may be disposed at each of one side and another side of the cooling member 20 with respect to a second direction (for example, the Y-axis direction). For example, the cooling member 20 may include a plurality of coolant inlet ports 22a disposed at one side of the second direction (the Y-axis direction) and a plurality of coolant outlet ports 22b disposed at the other side of the second direction (the Y-axis direction).

The cooling flow path 23 may extend from the plurality of coolant inlet ports 22a to the plurality of coolant outlet ports 22b. For example, referring to FIG. 5, the cooling flow path 23 may extend from one coolant inlet port 22a to one coolant outlet port 22b along the second direction. When the cooling flow path 23 is formed from the coolant inlet port 22a to the coolant outlet port 22b in a shortest distance as above, the coolant may circulate rapidly and the cooling performance of the cooling member 20 may be enhanced.

In example embodiments, as illustrated in FIG. 5, a cross-sectional area of the cooling flow path 23 may be larger than a cross-sectional area of the coolant inlet port 22a or the coolant outlet port 22b. In this case, as the coolant is spread widely within the cooling member 20 along the cooling flow path 23, the contact area between the coolant and the cooling member 20 may increase and the cooling efficiency of the cooling member 20 may increase.

Meanwhile, in the cooling member 20, a specific structure thereof including a position or the number of the coolant port 22, a shape or a path of the cooling flow path 23, and the like is not limited to the above description. For example, the position or the number of the coolant port 22 and the shape or the path of the cooling flow path 23 may be changed and implemented in various manners depending on an arrangement of the battery cell 110 and a contact location of the battery cell 110 and the cooling member 20.

Meanwhile, in example embodiments, the spacer 200 of the cell assembly 10 may be configured to guide a flow direction of a gas generated in the battery cell 110. For example, the spacer 200 may be disposed to face the sealing part 112b of the battery cell 110 and may have a structure for guiding a gas released due to a broken seal of a sealing part of the battery cell 110 to flow in a preset direction in an event situation.

Referring to FIGS. 7 and 8 together, the spacer 200 may include one or more inlet holes 210 disposed on a surface toward the cell unit 100, one or more discharge holes 220 disposed on a surface toward the lower frame 41, and a venting flow path part VP extending from the inlet hole 210 to the discharge hole 220. The sizes, numbers, and shapes of the inlet hole 210 and the discharge hole 220 may be set variously for gases to flow smoothly and are not limited to what is illustrated in the drawings.

A gas released through a damaged sealing part in an event situation may enter through the inlet hole 210 of the spacer 200 adjacent to the sealing part to the venting flow path part VP and then discharged through the discharge hole 220 in a direction toward the lower frame 41 of the pack housing 40.

A plurality of venting flow path parts VP partitioned from each other may be formed in one spacer 200. For example, referring to FIG. 8, the spacer 200 disposed between a first cell unit 100a and a second cell unit 100b may include a first venting flow path part VP1 through which a gas released from the first cell unit 100a may flow, a second venting flow path part VP2 through which a gas released from the second cell unit 100b may flow, and a partition wall 230 for partitioning the first venting flow path part VP1 from the second venting flow path part VP2.

The gases entering to the first venting flow path part VP1 and the second venting flow path part VP2 of the spacer 200 may be discharged through the discharge hole 220 opened on a lower surface of the spacer 200 in a downward direction (for example, a negative Z-axis direction) of the spacer 200.

The gas discharged from the spacer 200 may pass through the second venting hole 51 disposed to face the spacer 200 and flow out to the venting space VS formed by the cell tray 50.

For example, referring to FIG. 8, the battery cell and the spacer 200 may be seated on the cell tray 50 and supported, and the second venting hole 51 through which the gas may pass may be disposed at a portion facing the spacer 200 in the cell tray 50. The second venting hole 51 may be disposed to face the discharge hole 220 of the spacer 200 in an up and down direction (for example, a Z-axis direction), and accordingly, the gas discharged from the discharge hole 220 may rapidly flow out to the second venting hole 51.

The venting space VS that is a space where a gas may flow may be formed between the cell tray 50 and the lower frame 41 of the pack housing 40. The cell tray 50 may cover lower surfaces of the battery cells 110a, 110b and protect the battery cells 110a, 110b from the high-temperature gas flowing in the venting space VS. However, a shape or a structure of the venting space VS formed by the cell tray 50 is not limited to what is illustrated in FIG. 8. For example, the venting space VS may be formed within the cell tray 50 or may also be formed at only part of a lower portion of the cell tray 50 to form a preset gas flow path between the cell tray 50 and the lower frame 41.

By this gas flow structure, a gas released from one cell unit 100 may not be transferred to another cell unit 100 but may flow along a lower surface of the pack housing 40, in other words, a cell seating surface, then to be discharged safely.

In other words, the spacer 200 may prevent a high-temperature gas released from one cell unit 100 from directly influencing another adjacent cell unit 100 while guiding a gas discharge flow (in other words, directional venting) toward a predetermined direction (for example, the negative Z-axis direction).

In particular, when the battery cell 110 has the pouch-type secondary battery structure, unless a separate venting device is disposed in the cell case SC, a problem is present in that it is difficult to guide gases to be discharged in a predetermined direction, but the battery pack 1 according to example embodiments may guide a gas released from the battery cell 110 to flow in a predetermined direction, using the spacer 200 disposed adjacent to the battery cell 110.

Accordingly, since a fabricator may guide a flow direction of a gas released from the battery cell 110 in a desired direction, the safety of the battery pack 1 may further increase in an event situation.

The spacer 200 may include a material having heat resistance of a predetermined level or above so that the partition wall 230 and the venting flow path part VP are not collapsed by high-temperature gas. Further, the spacer 200 may include a material having thermal insulation in order to block heat transfer between neighboring cell units 100. Further, the spacer 200 may include an insulating material in order not to electrically short circuit with the cell unit 100. For example, the spacer 200 may be composed of various metal materials including aluminum or may be composed of a polymer resin material having both heat resistance and insulation.

Meanwhile, in various example embodiments, the cell unit 100 and the cooling member 20 may also be accommodated directly within the pack housing 40 without the cell tray 50. In this case, a spacing may be formed between the lower frame 41 of the pack housing 40 and the spacer 200, and a gas released from the spacer 200 may flow appropriately within the pack housing 40 through the spacing to exit to the outside of the battery pack 1 through a venting member (for example, 44 of FIG. 1) provided at one side of the pack housing 40.

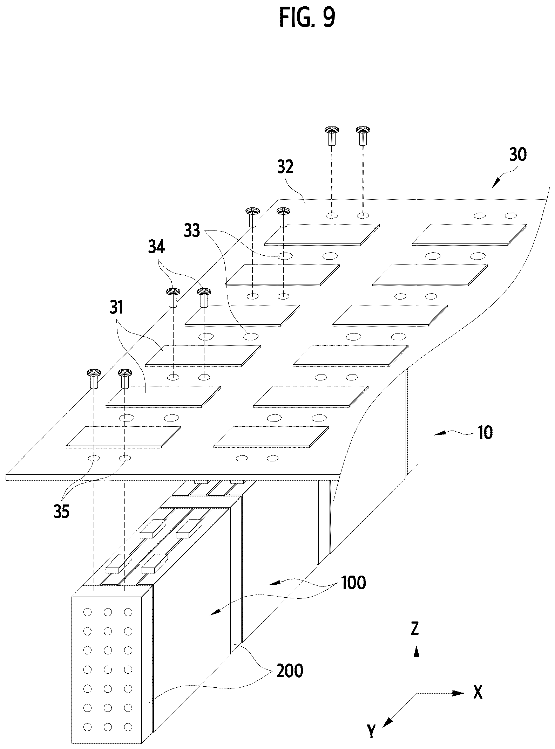

Hereinafter, with reference to FIG. 9, a configuration of the busbar assembly 30 included in the battery pack 1 is described in detail.

FIG. 9 is a reference diagram for illustrating a coupling of the cell assembly 10 and the busbar assembly 30.

The cell assembly 10 and the busbar assembly 30 described in FIG. 9 include all features of the cell assembly 10 and the busbar assembly 30 described above through FIGS. 1 to 8, and thus, an overlapping description may be omitted.

In the battery pack 1, electrically connecting one battery cell 110 to another battery cell 110 may be performed through the busbar assembly 30.

The busbar assembly 30 may include a plurality of busbars 31 electrically connected to the battery cell 110 and the busbar frame 32 supporting the busbar 31.

The busbar 31 may be formed of a conductive material (for example, a metal material such as copper) and may be mutually welded and electrically connected to the lead tab 113 of the battery cell 110. The plurality of busbars 31 may be coupled to the busbar frame 32 with a predetermined gap between each other so that a small current flows between each other or a short circuit is not generated.

The busbar frame 32 may be composed of a non-conductive material (for example, a resin material such as plastic) having predetermined stiffness and configured to structurally support the plurality of busbars 31. The plurality of busbars 31 may be fixed to the busbar frame 32, and a safety distance between the busbars 31 may be maintained even in a situation where external impacts or vibrations are applied.

To prevent a temperature of the busbar 31 from increasing excessively, the busbar assembly 30 may further include a heat dissipation member (not shown) that may absorb heat of the busbar 31. For example, the heat dissipation member (not shown) of resin material may be disposed in contact with a surface of the busbar 31, and accordingly, the heat generated in the busbar 31 may be discharged to the outside of the busbar assembly 30 rapidly and effectively.

The spacer 200 of the cell assembly 10 may be coupled to the busbar frame 32. For example, a lower surface of the busbar frame 32 may face an upper surface of the spacer 200 with each other in a height direction (for example, the Z-axis direction) of the battery pack 1, and an engaging member 34 may be engaged with the busbar frame 32 and the spacer 200 to fix the busbar frame 32 and the spacer 200 to each other. However, a coupling structure of the busbar frame 32 and the spacer 200 is not limited to the above description. For example, the spacer 200 may be coupled to the busbar frame 32 through an adhesive member or may also be coupled through a fit coupling structure in which a portion of the spacer 200 is interlocked with a groove formed on the lower surface of the busbar frame 32.

In the battery cell 110, when a seal of the sealing part 112a where the lead tab 113 is disposed is released, a gas may be discharged in an upward direction of the cell assembly 10, in other words, a direction toward the busbar assembly 30 from the cell assembly 10. As above, so that the gas discharged in the upward direction may smoothly exit, one or more first venting holes 33 may be provided in the busbar frame 32.

To prevent the gas released from the battery cell 110 from being in direct contact with the busbar 31, the first venting hole 33 may be disposed to avoid a location where the busbar 31 is disposed in the busbar frame 32. For example, referring to FIG. 8, the first venting hole 33 may be disposed between two neighboring busbars 31.

According to a discharge structure as above, a gas released from the first sealing part 112a of the battery cell 110 may be discharged through the first venting hole 33 of the busbar frame 32 in the upward direction (for example, the positive Z-axis direction), and a gas released from the second sealing part 112b may be discharged through the discharge hole 220 of the spacer 200 in a downward direction (for example, the negative Z-axis direction). Therefore, a direction of gas released from the cell assembly 10 may be guided and controlled in a preset direction (in other words, the upward direction and the downward direction), and thus, the safety of the battery pack 1 may be enhanced in an event situation.

Hereinafter, with reference to FIG. 10, a manufacturing method of the battery pack 1 according to example embodiments is described.

FIG. 10 shows an assembly sequence of the battery pack 1.

The battery pack 1 described in FIG. 10 includes all features of the battery pack 1 described above through FIGS. 1 to 9, and thus, an overlapping description may be omitted.

In example embodiments, the manufacturing method of the battery pack 1 may include an accommodating operation for accommodating the plurality of cell assemblies 10 and the plurality of cooling members 20 in the pack housing 40, a connecting operation for connecting the cell assemblies 10 and the busbar assembly 30 to each other, and a casing operation for sealing the pack housing 40.

In the accommodating operation, the cell assembly 10 and the cooling member 20 may be accommodated in the lower frame 41 of the pack housing 40. Referring to FIG. 10, the accommodating operation may proceed in the following sequence.

First, an assembly start line is set on the cell tray 50. In this case, the cooling member 20 may be disposed on the cell tray 50 with priority before the cell assembly 10 to form the assembly start line. If the cell unit 100 is disposed directly in the pack housing 40 without the cell tray 50, the assembly start line may also be set directly on the lower frame 41.

Subsequently, the cell assembly 10 is assembled along one surface of the cooling member 20. Referring to FIG. 10, along one surface of the cooling member 20 from the guideline GL set at one side of the cooling member 20, the cell unit 100 in which two or more battery cells 110 are stacked and the spacer 200 are disposed alternately to form the cell assembly 10. In this case, the cell unit 100 and the spacer 200 may be disposed to be in close contact with each other along the direction perpendicular to the stacking direction of the battery cells 110. In addition, the cell assembly 10 may be assembled so that the spacer 200 is disposed at both ends thereof.

Meanwhile, a thermally conductive adhesive may be applied between the cell tray 50 and a lower surface of the cell unit 100 to fix a location of the cell unit 100. In addition, the thermally conductive adhesive may be in contact with each of a lower surface of the battery cell 110 and the cell tray 50 to allow heat transfer by conduction to smoothly occur in a direction from the battery cell 110 toward the cell tray 50. If the cell unit 100 is disposed directly in the pack housing 40 without the cell tray 50, the thermally conductive adhesive may be applied between the lower frame 41 of the pack housing 40 and the lower surface of the cell unit 100.

The cooling member 20 is disposed at one side of the assembled cell assembly 10. In other words, each of one surface of one cell assembly 10 and an opposite surface thereto faces the cooling member 20. As the cooling member 20 is in surface contact with the battery cell 110 of the cell assembly 10, the cooling efficiency may be enhanced, and a detailed description thereof may refer to the descriptions regarding FIGS. 3 to 8.

Another cell assembly 10 is assembled again along one surface of the cooling member 20. The cell assemblies 10 and the cooling members 20 are disposed alternately along the stacking direction of the battery cells 110 in this manner.

The cell assemblies 10 are connected to a busbar assembly (for example, 30 of FIGS. 1 and 9) through the connecting operation.

In example embodiments, a size of the busbar assembly 30 may be changed appropriately, and the accommodating operation and the connecting operation may be performed sequentially or simultaneously depending on the size of the busbar assembly 30.

For example, the busbar assembly 30 may be provided in an enough size to cover upper portions of all of the cell assemblies 10 disposed within the pack housing 40. In this case, after the accommodating operation is completed, electrically connecting busbars to the battery cells 110 may be performed collectively in a state where the busbar assembly 30 is seated at the upper portions of the cell assemblies 10.

Alternatively, the busbar assembly 30 may be provided in an enough size to cover upper portions of some of the cell assemblies 10, and in this case, while the accommodating operation proceeds, the connecting operation may be performed simultaneously for the cell assemblies 10 of which the assembly is completed.

When connecting the battery cells 110 to the busbar assembly 30 is completed, the casing operation is performed. In the casing operation, an upper frame (for example, 42 of FIG. 1) covers an upper portion of the busbar assembly 30 to close the internal space of the pack housing 40.

In the battery pack 1 according to example embodiments, since a separate module case is omitted and the battery cell 110 and the cooling member 20 are accommodated directly in the pack housing 40, the battery pack 1 with high energy density may be implemented.

Further, in the battery pack 1 according to example embodiments, the cooling member 20 is disposed to face the electrode accommodation part 111 of the battery cell 110, which may maximize the cooling performance of the battery pack 1. In particular, as the plurality of battery cells 110 are stacked in one direction to form the cell unit 100, and a plurality of these cell units 100 may be disposed in the length direction of the cooling member 20 so that the electrode accommodation part 111 of the battery cell 110 faces the cooling member 20, and the cooling member 20 may be configured to face as many battery cells 110 in a state of surface contact as possible. Accordingly, the battery pack 1 with high energy density and excellent cooling performance may be implemented.

Further, in the battery pack 1 according to example embodiments, as the spacer 200 that may guide a gas discharge direction is disposed between the cell units 100, the locations of the cell units 100 may be fixed while a gas released from the battery cell 110 may be guided to be discharged in a preset direction (for example, a downward direction of the cell assembly 10).

While various example embodiments of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned example embodiments may be implemented with some elements removed, and each example embodiment may be implemented in combination with each other.

### [Description of symbols]

1... Battery pack 10... Cell assembly
20... Cooling member 30... Busbar assembly
31... Busbar 32... Busbar frame
33... First venting hole 40... Pack housing
43... Coolant pipe 50... Cell tray
51... Second venting hole 100... Cell unit
110... Battery cell 111... Electrode accommodation part
112a, 112b... Sealing parts 113... Lead tab
200... Spacer 210... Inlet hole
220... Discharge hole 230... Partition wall
VP... Venting flow path part GL... Guideline

## Claims

1. A battery pack comprising:
a plurality of cell units, each including one or more battery cells;
one or more spacers disposed between the plurality of cell units and provided with one or more venting flow path parts through which a gas released from the one or more battery cells flows; and
one or more cooling members disposed to face at least one of the plurality of cell units,
wherein the plurality of cell units and the one or more cooling members are disposed along a first direction, and
wherein the plurality of cell units and the one or more spacers are disposed along a second direction intersecting with the first direction.

2. The battery pack of claim 1,
wherein, in at least one of the plurality of cell units, the one or more battery cells are provided in plurality and disposed to be stacked along the first direction.

3. The battery pack of claim 1,
wherein the plurality of cell units and the one or more cooling members are disposed alternately along the first direction.

4. The battery pack of claim 1,
wherein the one or more battery cells include:
a cell case configured to surround an electrode assembly; and
a sealing part formed as the cell case is sealed on at least one side surface of the cell case, and
wherein the spacer is disposed to face the sealing part.

5. The battery pack of claim 1,
further comprising a pack housing including a lower frame in which the plurality of cell units are accommodated and an upper frame configured to cover an upper portion of the lower frame.

6. The battery pack of claim 5,
further comprising a busbar assembly configured to electrically connect the plurality of cell units,
wherein the busbar assembly is disposed between the plurality of cell units and the upper frame.

7. The battery pack of claim 6,
wherein the one or more battery cells include
one or more lead tabs protruding in a direction toward the upper frame and electrically connected to the busbar assembly.

8. The battery pack of claim 6,
wherein the busbar assembly includes:
a busbar electrically connected to at least one of the plurality of cell units; and
a busbar frame configured to support the busbar and provided with a first venting hole through which a gas released from the plurality of cell units is discharged.

9. The battery pack of claim 8,
wherein the one or more spacers are coupled to the busbar frame.

10. The battery pack of claim 5,
wherein the spacer includes:
one or more inlet holes opened in a direction toward the one or more battery cells; and
one or more discharge holes provided for a gas entering through the inlet hole to be discharged.

11. The battery pack of claim 10,
wherein, in the spacer, the discharge hole is opened in a direction toward a cell seating surface of the lower frame.

12. The battery pack of claim 1,
wherein the plurality of cell units include a first cell unit and a second cell unit contacting opposite surfaces of the one or more spacers, respectively, and
wherein the one or more spacers include:
a first venting flow path part through which a gas released from the first cell unit flows;
a second venting flow path part through which a gas released from the second cell unit flows; and
a partition wall configured to partition the first venting flow path part from the second venting flow path part.

13. The battery pack of claim 1,
wherein the cooling member includes:
a cooling body part disposed to face the one or more battery cells; and
a cooling flow path disposed inside the cooling body part and configured for a coolant to flow through.

14. The battery pack of claim 13,
wherein the cooling flow path has a path with at least one turn inside the cooling body part.

15. The battery pack of claim 13,
further comprising a pack housing configured to accommodate the plurality of cell units and including a coolant pipe configured for a coolant to flow through,
wherein the cooling flow path of the cooling member is in communication with the coolant pipe.

16. The battery pack of claim 13,
wherein the cooling member further includes
a plurality of coolant ports disposed at each of one side of the second direction and the other side of the second direction of the cooling member and in communication with the cooling flow path.

17. The battery pack of claim 16,
wherein the plurality of coolant ports include:
a plurality of coolant inlet ports disposed at one side of the second direction of the cooling member; and
a plurality of coolant outlet ports disposed at the other side of the second direction of the cooling member, and
wherein the cooling flow path extends from the plurality of coolant inlet ports to the plurality of coolant outlet ports along the second direction.

18. The battery pack of claim 1,
further comprising a cell tray on which the plurality of cell units are seated,
wherein the cell tray includes
a second venting hole configured for a gas generated in the one or more battery cells to pass through.

19. The battery pack of claim 18,
wherein the spacer includes:
one or more inlet holes opened in a direction toward the one or more battery cells; and
one or more discharge holes configured for a gas entering through the inlet hole to be discharged and disposed to face the second venting hole of the cell tray.

20. The battery pack of claim 18,
further comprising a pack housing configured to accommodate the plurality of cell units,
wherein a venting space is formed between a lower surface of the cell tray and the pack housing.
